# EUROPEAN PATENT APPLICATION

(11) **EP 4 718 345 A1**
(43) Date of publication of application: **01.04.2026**
(21) Application number: 25203152.1
(22) Date of filing: 18.09.2025
(51) Int. Cl.: G06N 20/00, H04L 67/56, H04W 40/02

(54) **METHOD, CONTROL PROGRAM, COMPUTER-READABLE DATA CARRIER, CONTROL UNIT, COMMUNICATION DEVICE, AND SYSTEM FOR PROVIDING A NETWORK STRUCTURE, AS WELL AS APPARATUS CONFIGURED TO PARTICIPATE AS A NETWORK NODE**

(30) Priority: 25.09.2024 DE 102024127682
(71) Applicant: Airbus S.A.S., 31700 Blagnac (FR)
(72) Inventor: Milheiro Mendes, Paulo-Jorge, 85521 Ottobrunn (DE)
(74) Representative: OTN Airbus SAS

(57) **Abstract**

A method, control program (11), computer-readable data carrier (12), control unit (24), communication system (1) and a corresponding apparatus (7) are provided, configuring a network structure (N) of a communication system (1) for providing a data connection (C) to transfer a data object (D) between a sender (A) and at least one receiver (B), in particular a vehicle (1), such as an aircraft, via at least one routing path (R) provided by network nodes (O) of the network structure (N), the method comprising the steps of assigning a global number (k) of network nodes (O) of the network structure (N) to a global domain (K) being controlled by a global controller (H); providing a global model of the global domain (K) based on routing parameters representing routing capabilities associated to the network nodes (O) assigned to the global domain (K); assigning a local number (I) of respective network nodes (O) assigned to the global domain (K) as subsets of the global number (k) to at least two local domains (L) each being controlled by a respective local controller (J); and providing respective local models of the local domains (L) based on routing parameters representing routing capabilities associated to the network nodes (O) assigned to each of the local domains (L); wherein the global controller (H) interacts with the local controllers (J) to identify at least one of the network nodes (O) which according to the global model and/or the local models provides routing capabilities allowing the at least one network node (O) to serve as a local proxy (P) enabling to place the data object (D) along the at least one routing path (R) such that it can be provided to the receiver (B) from the local proxy (P).

## Description

### Technical Field

The present description relates to the field of communication systems involving multiple participants in a network structure. In particular, the disclosure relates to a method of configuring a network structure of a communication system for providing a data connection to transfer a data object between a sender and at least one receiver, in particular a vehicle, such as an aircraft, via at least one routing path provided by network nodes of the network structure, to a computer-readable data carrier, to a control unit for providing a data connection between a sender and at least one receiver, to a communication device configured for participating in a network structure for providing a data connection to transfer a data object between a sender and at least one receiver, in particular a vehicle, such as an aircraft, via at least one routing path provided by network nodes of the network structure, and to an apparatus, in particular a vehicle, such as an aircraft.

### Technical Background

In order to improve the performance of mobile networks the prior art proposes several solutions that look at the storage of data at the edges of the network in order to minimise the latency of data retrieval and increase data service resilience. This is normally the case of cellular networks, providing support to pedestrian and vehicular (terrestrial and flying) mobility. However, the edge storage of infrastructures is finite, and in some situations, it is difficult to deploy, as is the case of remote areas, disaster situations or combat scenarios.

In these scenarios, the usage of distributed content caching assisted by involved apparatuses, in particular vehicles, such as flying drones of aircraft, serving as mobile communication devices, becomes a potential solution to content publishing services. Mobile communication devices, e.g., in the form of drones and aircraft, are highly effective in solving the communication challenges of the previously mentioned scenarios, due to their rapid deployment capabilities. By deploying them as networking nodes in the air, it is possible to establish a Local Area Network (LAN) and backbone network, even in locations without existing network infrastructure. This approach is supposed to significantly reduce the data transmission time compared to relying solely on satellite links as laid down by Liu C, Feng W , Chen Y , et al. "Cell-Free Satellite-UAV Networks for 6G Wide-Area Internet of Things", IEEE Journal on Selected Areas in Communications, vol.39, no.4, pp.1116-1131,2021 (https://ieeexplore.ieee.org/document/9174846).

Several networking frameworks according to the prior art that support the usage of distributed content caching, such as Information-centric networks (ICN) as described by loannou A., Weber S., "A Survey of Caching Policies and Forwarding Mechanisms in Information-Centric Networking", IEEE Commun. Surv. Tutor. 2016;18:2847-2886. doi: 10.1109/COMST.2016.2565541, allow data objects to be cached and retrieved from any intermediate node in the network, such for instance from an aircraft. Data caching is normally performed in all the nodes in the path from the data source and receivers, without any consideration about the nature of the data being transported and the surrounding context of all nodes in the network.

Moreover, according to the prior art, data is normally cached as a response to an explicit data request, without any action being done in advance aiming to bring data closer to potential future consumers. In-network caching is one of the main methods used to reduce network load, increase data availability, and reduce delivery latency to data consumers, in particular mobile consumers. The reasons to perform data caching inside a network are fold: On the one hand, if data is only available at the data producer or cached nearby, the network around the data producer may be affected by heavy traffic load and the data delivery latency may increase. On the other hand, if data objects are cached only near consumers, requests for data objects can be retrieved faster, but if data objects are placed too close to some data consumers, it may not become available to others that may be in adjacent network branches or domains. Hence, a major issue in data distribution according to the prior art is the decision on which intermediary nodes data should be cached.

In the context of information centric networks, caching schemes may be grouped into the following five categories: (a) popularity-based caching, probabilistic caching, label-based caching, and graph-based caching, such as described by Zhang M., Luo H., Zhang H, "A Survey of Caching Mechanisms in Information-Centric Networking", IEEE Commun. Surv. Tutor. 2015:17:1473-1499; (b) probabilistic caching based on routers using a probability value p to make a caching decision; (c) label-based caching using policies related to content objects that are labelled based on certain properties; (d) graph-based caching considering forwarding routes and network structure to place content objects in the delivery path; and (e) popularity-based caching, wherein intermediary nodes decide to cache, or not, a certain data object based on the frequency and request distribution for such data.

Furthermore, according to prior art, several mechanisms exist attempting to use Deep Reinforcement Learning (DRL) for the optimization of mobile networks, namely networks encompassing an ad hoc number of flying devices. An example is the proposal to devise a control strategy utilising (DRL) to maximise communication coverage and network connectivity for multiple real-time users within a specified timeframe as described by G. B. Tarekegn, R. -T. Juang, H. - P. Lin, Y. Y. Munaye, L. -C. Wang and M. A. Bitew, "Deep-Reinforcement-Learning-Based Drone Base Station Deployment for Wireless Communication Services," IEEE Internet of Things Journal, vol. 9, no. 21, Nov.1, 2022 (https://ieeexplore.ieee.org/document/9794697).

Other examples according to the prior art described by Wang, L.; Zhang, H.; Guo, S.; Yuan, D. "3D UAV Deployment in Multi-UAV Networks with Statistical User Position Information," IEEE Commun. Lett. vol.26, no.6, pp.1363-1367, 2022 (https://ieeexplore.ieee.org/document/9739696) relate to the usage of particle swarm optimization algorithms to optimise the deployment positions of multiple drones, aim to improve network coverage as described by Z. Dai, Y. Zhang, W. Zhang, X. Luo and Z. He, "A Multi-Agent Collaborative Environment Learning Method for UAV Deployment and Resource Allocation", IEEE Transactions on Signal and Information Processing over Networks, vol. 8, pp. 120-130, 2022 (https://ieeexplore.ieee.org/document/9712375), or to support decision making processes related to deployment positions that may affect transmission power and occupied wireless channels as described by Z. Dai, Y. Zhang, W. Zhang, X. Luo and Z. He, "A Multi-Agent Collaborative Environment Learning Method for UAV Deployment and Resource Allocation," IEEE Transactions on Signal and Information Processing over Networks, vol. 8, pp. 120-130, 2022 (https://ieeexplore.ieee.org/document/9712375).

In multi-domain mobile networks, such as multi-domain combat cloud systems, the privacy of various types of sensitive data must be protected, namely when cooperation between devices in different domains is needed. In this case, the usage of Federated Leaming (FL) may help to preserve privacy, by allowing the transmission of only the model instead of the raw data during the training process between nodes in different domains. However, the update of learning models implies a large number of parameters, which leads to high communication costs.

To tackle this challenge, a potential solution according to the prior art passes by using a federated learning method that utilises adaptive knowledge distillation and dynamic gradient compression techniques as suggested by Wu, Chuhan and Wu, Fangzhao and Lyu, Lingjuan and Huang, Yongfeng and Xie, Xing, "Communication-efficient federated learning via knowledge distillation", Nature communications,2022,2032. However, these approaches according to the prior art, and other similar approaches as suggested by Wang H P, Stich S, He Y, et al. "Communication-efficient federated learning via knowledge distillation,"International Conference on Machine Learning, pp.23034-23054,2022, have been proposed for specific scenarios and do not aim to improve the overall network workload problem from the perspective of the produced and consumed data volumes, in different parts of the network. Thus, the known prior art fails to provide efficient and reliable mechanisms for data provision in mobile telecommunication structure involving a number of heterogeneous apparatuses, of which at least some may have limited and changing communication capabilities due to certain technical and/or availability constraints, e.g., caused by changing their geographic locations.

### Summary

In view of the above, it may be seen as an object to provide an efficient management mechanism capable of coordinating data exchange between several heterogeneous network nodes, while respecting the privacy constraints of inter-domain communication. In particular, it may be seen as an object to enable an efficient and low latency provision of data objects by and/or to any of the network nodes upon request of senders and/or receivers, respectively, which may participate in fluctuating or fluent network structures, as it may be the case when at least some of the participants are mobile. This object is solved by the subject matter of the independent claims.

According to an aspect, a method of configuring a network structure of a communication system for providing a data connection to transfer a data object between a sender and at least one receiver, in particular a vehicle, such as an aircraft, via at least one routing path provided by network nodes of the network structure, is provided, the method comprising the steps of assigning a global number of network nodes of the network structure to a global domain being controlled by a global controller; providing a global model of the global domain based on routing parameters representing routing capabilities associated to the network nodes assigned to the global domain; assigning a local number of respective network nodes assigned to the global domain as subsets of the global number to at least two local domains each being controlled by a respective local controller; and providing respective local models of the local domains based on routing parameters representing routing capabilities associated to the network nodes assigned to each of the local domains; wherein the global controller interacts with the local controllers to identify at least one of the network nodes which according to the global model and/or the local models provides routing capabilities allowing the at least one network node to serve as a local proxy enabling to place the data object along the at least one routing path such that it can be provided to the receiver from the local proxy.

According to an aspect, a control program for controlling a communication system is provided, comprising instructions which, when the control program is executed by a control unit, cause the control unit to carry out a corresponding method.

According to an aspect, a computer-readable data carrier is provided, having stored thereon a corresponding control program.

According to an aspect, a control unit for controlling for providing a data connection between a sender and at least one receiver is provided, wherein the control unit is configured to carry out a corresponding method according to at least one of claims as a domain controller and/or global controller and/or comprises a corresponding computer-readable data carrier.

According to an aspect, a communication device configured for participating in a network structure for establishing a data connection to transfer a data object between a sender and at least one receiver, in particular a vehicle, such as an aircraft, via at least one routing path provided by network nodes of the network structure, is provided, the communication device, configured to carry out a corresponding method according to at least one of claims, comprising a corresponding computer-readable data carrier according to claim, and/or a corresponding control unit.

According to an aspect, an apparatus, in particular a vehicle such as a satellite, an aircraft, a mobile communication station or a ground station, is provided, comprising a corresponding computer-readable data carrier according to claim, at least one control unit according to claim, at least one communication device according to claim, and/or configured to participate as a network node in a corresponding communication system.

Data objects can be placed in different autonomous domains, e.g., comprising groups of nodes in a common area, region, and/or altitude, in a decentralised manner so that data is cached based on its nature (e.g. popular data) and the properties on available network nodes. The data connection can be configured for sending data stream containing the data object from the sender to the receiver. The data connection can be configured and/or reserved for transferring mission data.

At least one network offering sufficient routing capabilities can be designated to be a local proxy arranged along the routing path. The routing path can be laid such that it involves the local proxy. At least the local proxy and/or the receiver can be located on a vehicle, in particular an aircraft.

The present solution enables to implement an operation of a multi-domain data management system based on federated learning. The global controller can coordinate inter-domain data distribution between the local domains. The routing parameters can be stored in local experience memories of the local controllers to further train the global model and/or local models to enhance data provision capabilities of the network structure.

Hence, this solution allows for a cooperation between sets of distributed nodes (e.g. aircraft) to coordinate a best possible decision in selecting network nodes to store a copy of certain data objects, taking into account the nature of the data, the context of networking nodes (e.g. storage capacity and network diversity) and an hierarchical relationship between them. Therefore, it can be assumed that a network encompasses heterogeneous nodes (e.g. terrestrial, flying, space) that can be clustered into autonomous local domains that, although willing to cooperate, would like to avoid revealing confidential operational information.

Consequently, efficient data management mechanisms are provided which are capable of coordinating several heterogeneous network nodes, placed in different autonomous domains, in a decentralised manner so that data is cached based on its nature (e.g. popular data) and the properties on available network nodes, while respecting the privacy constraints of inter-domain communication. The decentralised solution involving a hierarchical structure of mobile devices with heterogeneous capabilities (e.g. drones, aircraft, tanker, High altitude pseudo satellites and satellites) to be organised in different networking autonomous domains able to cooperate to augment the capability of the network to distribute and cache data by means of a federated learning mechanism can make use of modelling the real-time perception of the network status, such as overload of transmission links and node storage caused by large volumes of data, and to adjust the data exchange and storage rules accordingly, while ensuring the privacy of the network status within the domain. Compared to other federated reinforcement learning algorithms, the proposed algorithm aims to reduce transmission overhead, while accelerating the convergence speed of the learning model.

In comparison with other approaches that aim to allow smart distribution of data among heterogeneous nodes in different autonomous domains, the proposed solution has the benefits that a hierarchical, multi-domain data exchange and caching framework enhancing network control and simplifying network management is enabled. In-network computing can be leveraged by making use of the computing and communication capabilities of flying devices such as drones and aircraft in order to allow the placement of data objects in optimal locations in the network and not just closer to the consumers and/or data producers. Heterogeneous storage can be leveraged by providing respective computing and networking capabilities of different flying devices (e.g. tankers and satellites) to serve as domain controllers, deploying efficient data processing algorithms on them.

Further developments can be derived from the dependent claims and from the following description. Many of the features described with reference to a method may be implemented as device features, or vice versa. Therefore, the description provided in the context of a method for establishing a communication channel applies in an analogous manner also to a control unit, a communication device, a communication system, and/or an apparatus, respectively. In particular, the steps of a methods and mentioned components involved therein may be implemented as functions of a control unit, a communication device, a communication system, and/or an apparatus, and their functions may be implemented as method steps.

According to an embodiment of a method, in sum, the local numbers are smaller than or equal to the global number. Subsets of network nodes in local domains may or may not interleave. Thereby, the local domains maybe created as desired or required for providing and managing respective network nodes to allow for a reliable and efficient decentralised provision of data.

According to an embodiment of a method, the routing parameters comprise a trajectory parameter of a trajectory, a connection parameter of the data connection and/or a storage parameter of a storage capacity of the network nodes. The connection parameter can represent a connection quality and/or a signal strength. The routing parameters can be compared to respective threshold values. This further helps in selecting and managing network nodes to allow for a reliable and efficient decentralised provision of data.

According to an embodiment of a method, the method further comprises the step of performing an intra-domain update, wherein each local controller gathers the routing parameters to train and/or update the local model and/or the routing parameters. A local domain process may be carried out using an intra-domain routing algorithm to gather the routing parameters to train and/or update the local model and/or the routing parameters. Thereby, amounts of updated data provided from the local controllers to the global controller can limited which in turn can help in enhancing the performance of the communication system, both in data provision speed and capacity.

According to an embodiment of a method, each domain controller trains the respective local model based on the routing parameters and stores states that are then aggregated to form a proxy state to be assigned to the at least one local proxy. Collected local data may comprise the routing parameters. This further helps in decentralising the communication system in a manner that autonomous storage and social computing capacities of the involved network nodes can be leveraged.

According to an embodiment of a method, the method further comprises the step of uploading routing parameters from the local controllers to the global controller. Collected local data can comprise and/or be comprised of the routing parameters belonging to the local domain. After all agents in a domain have filled the experience memory, the proxy state can be calculated, as well as the corresponding average strategy, and both can then be uploaded to the global controller. Thereby, the global controller can help in achieving a coherent state of the communication system, thus providing enhanced central overview and control in selecting and managing network nodes to allow for a reliable and efficient decentralised provision of data.

According to an embodiment of a method, the method further comprises the step of aggregating the local models in the global model. For example, after the local proxy experience memories are uploaded to the global controller, they can then be aggregated. The same proxy states of multiple domains can be combined into one proxy state. Corresponding policies can then, once again, be averaged. The global controller can train the global model through the aggregated proxy memories to generate global model parameters. A model convergence judgement can be performed before the global model parameters are being issued to the local controllers and/or network nodes. If the model converges, it means that the global model has been learned, and the federated reinforcement learning algorithm may end. Otherwise, the algorithm may enter the parameter delivery stage as described below. This further allows for implementing machine learning algorithms in an efficient, reliable and targeted manner yielding to technically operable results given possible functional constraints of the involved network nodes as described above.

According to an embodiment of a method, the method further comprises the step of delivering the global parameters to the domain controllers. In this stage, the global parameters are delivered to each domain controller. The domain controllers can assign the parameters to the local model and use local data to update respective model training parameters. This may additionally help in decentralising the communication system in a manner that autonomous storage and social computing capacities of the involved network nodes can be leveraged.

According to an embodiment of a method, the steps of performing an intra-domain update, uploading routing parameters from the local controllers to the global controller, aggregating the local models in the global model, and/or delivering the global parameters to the domain controllers are being cyclically executed. Thereby, real-time, or at least near real-time optimisation of the data provision decisions can be implemented.

### Brief Description of the Drawings

The subject matter will hereinafter be described in conjunction with the following drawing figures, wherein like numerals denote like elements, and wherein:
Fig. 1 is a schematic representation of a communication system.
Fig. 2 is a schematic representation of the steps of a method.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

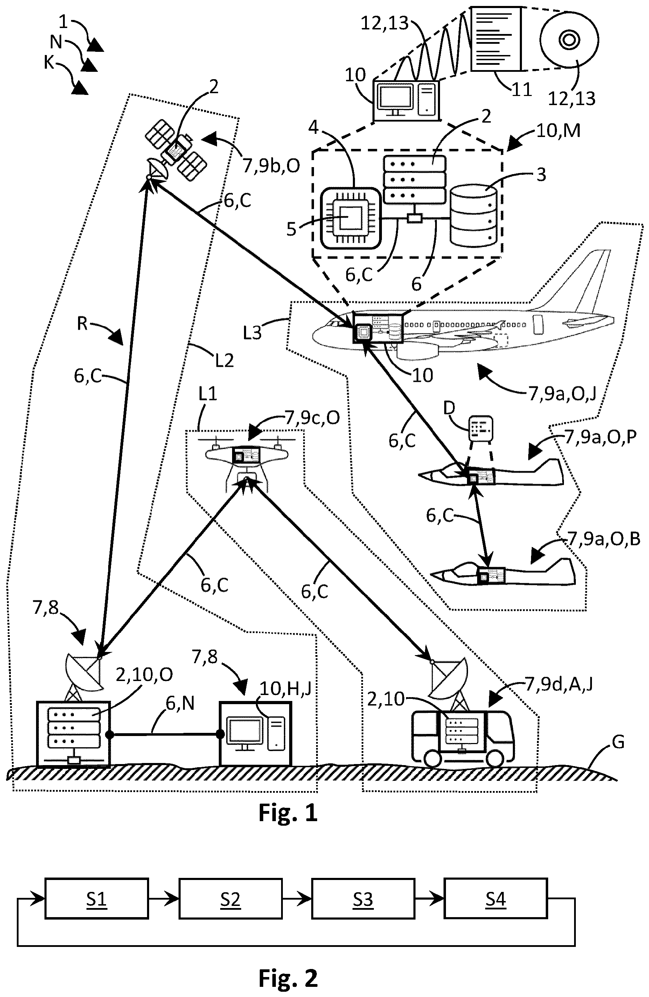

Fig. 1 shows a schematic representation of a communication system 1 comprising a number of communication devices 2 and respective control units 3 which may be provided with interface modules 4 to connect the communication devices 2 and/or control units 3 to control elements 5 which can be connected to each other via the respective transmission lines 6 which may be configured transport any kind of information, data, power and/or energy, including photonic links. Therefore, the transmission lines 6 which may involve any suitable wired, wireless, and or optical communication means, including lines, cables, transceivers, antennas, satellite dishes, and alike. In present example, the communication devices 2 and respective control unit 3 may be provided to apparatuses 7, such as ground stations 8 on a ground G and/or vehicles 9, including aircraft 9a, satellites 9b, unmanned aerial vehicles (UAV) 9c and/or ground vehicles 9d. The apparatuses 7 may comprise respective computer systems 10 which may include communication devices 2, control units 3, interface modules 4, control elements 5 and/or transmission lines 6 as desired or required for their respective application, e.g. for enabling data transfer, storage, computation, secure communication, and/or precision sensing of certain parameters and/or values, such as for sensing acceleration, gravity, magnetic effects, photonic effects, radiation, rotation, or alike, by means of the control elements 5 to be then computed by means of the communication devices 2 configured for establishing a network structure N via respective communication channels C for transferring data objects D along a respective routing path R which may comprise several segments which can be provided by respective communication channels C.

A computer program 11 for controlling the computing devices 10 can be stored on a computer-readable data carrier 12 which may take the form of a computer-readable medium 13 and/or data carrier signal 14. The computer system 10 may comprise the communication device 2, control unit 3, interface module 4, control element 5 and/or transmission lines 7, the computer program 11, the computer-readable data carrier 12, which may be adapted for exchanging data between the respective above-mentioned components. Control elements 9 may be any kind of data source, such as a measuring element, sensor, output device and/or actuator of any of the apparatuses 7. The involved communication devices 2 may therefore serve as source communication devices 2 in the sense of a sender A, destination communication devices 2 the sense of a receiver B, and/or network nodes O.

The network nodes O may belong to a global domain K comprising local domains L, such as the first local domain L1, a second local domain L2, a third local domain L3, etc., and which are controlled by a global controller H and/or a local controller J, respectively. The global domain K may comprise a global number k of network nodes O. The local domains L may comprise a local number l. Each of the network nodes O may act as a local proxy P which can store the data object D in its communication device 2 and/or respective computer system 10 according to respective storage capacity M, for example, a certain computer memory or designated memory space thereof.

The communication system 1 enables a mechanism for federated enhanced distillation in a hierarchical network of apparatuses 1, such as flying devices in order to coordinate the distribution of data objects D among available storage capacities M which may provide local caches of the network structure N aiming to reduce the latency experienced by the participants. In multi-domain flying networks environments, each local domain L may generate relatively small amounts of data. This means that each domain controller J requires extensive training to obtain a stable model, which significantly increases the model training time and computational energy consumption of e.g. flying communication devices 2 acting as local controllers J.

Moreover, since each local controller J can only use data within its own local domain L for training, the trained model exhibits specific characteristics and is only suitable for local data distribution decisions. To address these challenges, a hierarchical reinforcement learning data distribution mechanism can be implemented. This mechanism can be able to interconnect different model training domains and to aggregate data from multiple local domains L. Each local controller J can participate in the training of the complete model, thereby expanding the data samples and avoiding the leakage of network state information within each local domain L.

However, to perform tasks within each domain, complex models need to be deployed, which may result in resource wastage. Hence, in the proposed federated reinforcement distillation approach, it is not the model parameters that are transmitted, but a proxy of the experiential memory in the local domain L. Moreover, in such multi-domain scenarios, local controllers J with larger-scale neural networks can be deployed to achieve a better task performance, while smaller-scale models can be deployed in simpler task domains. This enables models in each local domain L to complete tasks more efficiently within their local domain L, thus reducing the computational energy consumption of the local controller J, which may be a flying apparatus 7, such as an aircraft 9a, satellite 9b, UAV9c and/or ground vehicle 9d with limited energy resources.

The proposed hierarchical multi-domain network structure N framework aims to establish communication channels C for mobile network nodes O, thereby creating a mobile edge computing network system where flying devices can act as edge controllers. The proposed network framework consists of two main levels: the control level and the data distribution level. The control level comprises the global controller H, for example, deployed in a control centre in a ground station 8 or in a satellite and high-performance flying apparatuses 7, such as carrier aircraft as domain controllers, one for each local domain L. The data distribution level encompasses several flying apparatuses 1 (e.g. UAVs, aircrafts, drones) able to provide mobile networking and data object D forwarding services to receivers B (e.g. on board the aircrafts 9a or on the ground G).

In the proposed framework, the data distribution matrix is directly determined by the deep reinforcement learning mechanism executed in the global controller H as well as the different local controllers J, with the aim of achieving the best data distribution among all network nodes O of the data plan aiming to achieve very low latencies to all receivers B. After taking an action, each local controller J takes local actions modifying the current status of different network nodes O in the data plane of their local domains L. For example, it can be assumed that all local controllers J can communicate with the global controller H via air-to-ground or satellite communication. In order to protect the privacy of the information of the different local domains L (e.g. topology, link state, node state, or network traffic state), the overall decision-making model deploys the federal learning framework on each local controller J and/or on the global controller H, so as to improve data privacy and security while reducing network transmission overheads.

Each local controller J can be responsible for collecting status information within its local domain L and ensuring information consistency throughout the network structure N. When the local controller J receives an intra-domain data request, it starts by identifying the forwarding path towards interested clients, and then sends control messages to the network nodes O in the respective local domain L data plane to modify their data caching status allowing data to be distributed with lower delay. The global controller H interacts with each local controller J to coordinate inter-domain data distribution. Multi-domain routing is facilitated by the local controllers J and/or the global controller H through a federation model.

The local controllers J can be responsible for maintaining the routing information and data distribution within each local domain L and updating it within the global controller H as a parameter for federated learning. The global controller H collects parameters from all domain controllers and maintains a global federated learning model. As the model parameters are transmitted during the learning process, the specific routing path information and data distribution matrices within each local domain L can be protected, ensuring privacy preservation.

Fig. 2 shows a schematic representation of the steps S or stages of a method for assessing rouging paths R using respective communication channels C. Certain steps S may involve respective decisions. An exemplary operation of the proposed method protocol can involve four steps S or stages, namely firstly, an intra-domain update step S1, secondly, a parameter upload step S2, thirdly, a global model training/aggregation step S3, and fourthly, a parameter delivery step S4, as explained in the following:
In the first step S1 or stage - Intra-domain update - a local domain process can use an intra-domain routing algorithm to gather the needed data to train the local model and update the relevant parameters. Each local domain L trains the model based on collected local data and stores states that are then aggregated to form a proxy state.

In the second step S2 or stage - parameter upload - after all agents in a local domain L have filled the experience memory, the proxy state is calculated, as well as the corresponding average strategy, and both are then uploaded to the global controller H.

In the third step S3 or stage, when the local proxy experience memories are uploaded to the global controller H, they can then be aggregated. The same proxy states of multiple domains can be combined into one proxy state, and the corresponding policies can then, once again, be averaged. The global controller H can train the global model through the aggregated proxy memories to generate global model parameters. The model convergence judgement can be performed before the global model parameters are issued. If the model converges, it means that the global model has been learned, and the federated reinforcement learning algorithm may end. Otherwise, the algorithm enters the parameter delivery stage S4.

In the fourth step S4 or stage - parameter delivery - the global parameters can be delivered to each local controller J. The local controllers J can assign the parameters to the local model and use local data to update the model training parameters.

This four-step and/or stage process can be executed cyclically. During the training process, the experience replay technique can be used to store a series of states, actions, rewards, and next states obtained by the local controllers L interacting with the environment in an experience replay pool. During training, fixed batches of data can be randomly selected from the experience pool to increase the training speed. However, since each data object D stored after the interaction with the environment contains the next moment state, there is a certain correlation between the samples. To reduce the correlation between data samples and to prevent the training process from falling into the local optimum, a random strategy can be adopted when selecting the data set. Such an exemplary federated enhanced distillation algorithm does not cause the leakage of sensitive intra-domain data when combining multi-domain agent experience memory, and the proposed algorithm can reduce the amount of data that needs to be transmitted, thereby reducing communication overheads.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of Reference Signs

- 1: communication system
- 2: communication device
- 3: control unit
- 4: interface module
- 5: control element
- 6: transmission line
- 7: apparatus
- 8: ground station
- 9: vehicle
- 9a: aircraft
- 9b: satellite
- 9c: UAV / drone
- 9d: ground vehicle
- 10: computer system
- 11: computer / control program
- 12: computer-readable data carrier
- 13: computer-readable medium
- 14: data carrier signal

- k: global number
- l: local number

- A: source / sender
- B: destination / receiver
- C: communication channel
- D: data object
- G: ground
- H: global controller
- J: local controller
- K: global domain
- L: local domain
- M: storage capacity/memory
- N: network structure
- O: network node
- P: local proxy
- R: routing path
- S: step

- L1: first local domain
- L2: second local domain
- L3: third local domain

- S1: intra-domain update
- S2: parameter upload
- S3: aggregate/train global model
- S4: parameter delivery

## Claims

1. Method of configuring a network structure (N) of a communication system (1) for providing a data connection (C) to transfer a data object (D) between a sender (A) and at least one receiver (B), in particular a vehicle (1), such as an aircraft, via at least one routing path (R) provided by network nodes (O) of the network structure (N), the method comprising the steps of
assigning a global number (k) of network nodes (O) of the network structure (N) to a global domain (K) being controlled by a global controller (H);
providing a global model of the global domain (K) based on routing parameters representing routing capabilities associated to the network nodes (O) assigned to the global domain (K);
assigning a local number (l) of respective network nodes (O) assigned to the global domain (K) as subsets of the global number (k) to at least two local domains (L) each being controlled by a respective local controller (J); and
providing respective local models of the local domains (L) based on routing parameters representing routing capabilities associated to the network nodes (O) assigned to each of the local domains (L);
wherein the global controller (H) interacts with the local controllers (J) to identify at least one of the network nodes (O) which according to the global model and/or the local models provides routing capabilities allowing the at least one network node (O) to serve as a local proxy (P) enabling to place the data object (D) along the at least one routing path (R) such that it can be provided to the receiver (B) from the local proxy (P).

2. Method according to claim 1, wherein in in sum, the local numbers (I) are smaller than or equal to the global number (k).

3. Method according to claim 1 or 2, wherein the routing parameters comprise a trajectory parameter of a trajectory, a connection parameter of the data connection (C) and/or a storage parameter of a storage capacity (M) of the network nodes (O).

4. Method according to at least one of claims 1 to 3, further comprising the step of performing an intra-domain update, wherein each local controller (J) gathers the routing parameters to train and/or update the local model and/or the routing parameters.

5. Method according to claim 4, wherein each domain controller (J) trains the respective local model based on the routing parameters and stores states that are then aggregated to form a proxy state to be assigned to the at least one local proxy (P).

6. Method according to at least one of claims 1 to 5, further comprising the step of uploading routing parameters from the local controllers (J) to the global controller (H).

7. Method according to at least one of claims 1 to 6, further comprising the step of aggregating the local models in the global mode.

8. Method according to at least one of claims 1 to 7, further comprising the step of delivering the global parameters to the domain controllers (J).

9. Method according to at least one of claims 1 to 8, wherein the steps (S) of performing an intra-domain update, uploading routing parameters from the local controllers (J) to the global controller (H), aggregating the local models in the global model and/or delivering the global parameters to the local controllers (J) are being cyclically executed.

10. Control program (11) for controlling a communication system (1), comprising instructions which, when the control program (11) is executed by a control unit (3), cause the control unit (3) to carry out a method of at least one of claims 1 to 9.

11. Computer-readable data carrier (12) having stored thereon the control program according to claim 10.

12. Control unit (24) for providing a data connection (C) between a sender (A) and at least one receiver (B), wherein the control unit (24) is configured to carry out a method according to at least one of claims 1 to 9 as a q and/or global controller (H) and/or comprising a computer-readable data carrier (12) according to claim 11.

13. Communication device (2) configured for participating in a network structure (N)for establishing a data connection (C) to transfer a data object (D) between a sender (A) and at least one receiver (B), in particular a vehicle (1), such as an aircraft, via at least one routing path (R) provided by network nodes (O) of the network structure (N), the communication device (2), configured to carry out a method according to at least one of claims 1 to 10, comprising a computer-readable data carrier (12) according to claim 11, and/or a control unit (24) according to claim 12.

14. Communication system (2) configured to provide a data connection (C) to transfer a data object (D) between a sender (A) and at least one receiver (B), in particular a vehicle (1), such as an aircraft, via at least one routing path (R) provided by network nodes (O) of a network structure (N), the communication system (2) configured to carry out a method according to at least one of claims 1 to 10, comprising a computer-readable data carrier (12) according to claim 11, a control unit (24) according to claim 12, and/or a communication device according to claim 13.

15. Apparatus, in particular a vehicle (9), such as an aircraft, comprising a computer-readable data carrier (12) according to claim 11, at least one control unit (3) according to claim 12, at least one communication device (2) according to claim 13, and/or configured to participate as a network node (O) in a communication system (1) according to claim 14.
